# EUROPEAN PATENT APPLICATION

(11) **EP 4 836 025 A1**
(43) Date of publication of application: **04.11.2026**
(21) Application number: 23962773.0
(22) Date of filing: 29.12.2023
(51) Int. Cl.: H01M 4/66

(54) **COMPOSITE CURRENT COLLECTOR FOR LITHIUM BATTERY, DEVICE FOR PREPARING COMPOSITE CURRENT COLLECTOR, AND METHOD FOR PREPARING COMPOSITE CURRENT COLLECTOR FOR LITHIUM BATTERY**

(71) Applicant: Naxau New Materials Corporation, Jiaxing, Zhejiang 314200 (CN); Dong Guan Hanjing Nano Materials Ltd, Dongguan, Guangdong 523700 (CN)
(72) Inventor: SHEN, Xuezhong, Jiaxing, Zhejiang 314200 (CN); GUO, Bei, Jiaxing, Zhejiang 314200 (CN)
(74) Representative: Banse & Steglich Patentanwälte PartmbB
(86) International application number: PCT/CN2023/143202
(87) International publication number: WO 2025/138096

(57) **Abstract**

The present disclosure discloses a composite current collector for a lithium battery, an apparatus for preparing a composite current collector and a method for preparing a lithium battery composite current collector. The composite current collector comprises a base film, an interlayer and a metal layer. The interlayer comprises composite particles comprising a conductive inner core and a thermoplastic cladding layer. The inner core is distributed on the base film in a full-wrapping or semi-wrapping manner by the cladding layer to increase the mechanical strength of the composite current collector, so that the composite current collector is not prone to shrinkage distortion due to heating. The apparatus comprises a transmission component, spraying devices and a coating component. The transmission component is used for transmitting the base film. The spraying devices are used for spraying the composite particles to form the interlayer on the base film. The coating component is used for forming the metal layer on the interlayer.

## Description

### Field of the Invention

The present disclosure belongs to the field of lithium battery composite current collectors, and particularly relates to a composite current collector for a lithium battery, an apparatus for preparing a composite current collector and a method for preparing a lithium battery composite current collector.

### Background of the Invention

With the continuous increase in a new energy vehicle industry, the demand for lithium ion batteries is also rapidly increasing. A current collector, as one of indispensable components in the lithium ion battery, and can not only bear an active substance but also collect and output currents produced by the active substance of an electrode. A composite current collector is a composite material with metal atoms accumulated on two surfaces, which is formed by vacuum coating and other processes based on polyethylene terephthalate (PET)/polypropylene (PP) and other raw material films as a base film, and forms a "metal-polymer-metal" three-layer composite structure. At present, the common vacuum preparation method is basically one of magnetron sputtering and evaporation coating, or their combination. Through magnetron sputtering, an nm-level bottom layer is formed on the surface and then a metal layer is thickened by using vacuum evaporation and other methods. In this process, how to ensure a good adhesive force between the base film and a coating layer is a key for the stable running of the composite current collector in the future.

### Summary of the Invention

In view of this, the present application provides a composite current collector for a lithium battery, an apparatus for preparing a composite current collector and a method for preparing a lithium battery composite current collector, in order to solve the above problems.

According to the embodiments of the present disclosure, provided is a composite current collector for a lithium battery. The composite current collector comprises a base film, an interlayer and a metal layer formed on the interlayer. The interlayer comprises composite particles comprising a conductive inner core and thermoplastic cladding layer. The inner core is distributed on the base film in a full-wrapping or semi-wrapping manner by the cladding layer to increase the mechanical strength of the composite current collector so that the composite current collector is not prone to shrinkage distortion due to heating.

In some embodiments, the elongation at break of the composite current collector ranges from 31.2% to 48.2%.

In some embodiments, the peel strength of the composite current collector ranges from 6.8 N/cm to 9.3 N/cm.

In some embodiments, the tensile strength of the composite current collector ranges from 182 MPa to 233 MPa.

In some embodiments, the cladding layer comprises a mixture of any one or more of polyethylene, polypropylene, polyvinyl chloride, polystyrene, polyamide, polyoxymethylene, polycarbonate, polyphenylene ether, polysulfone and polyethylene terephthalate.

In some embodiments, the cladding layer also comprises graphene.

In some embodiments, the thickness of the cladding layer is in a range of less than 10 nm.

In some embodiments, the thickness of the cladding layer ranges from 6 nm to 8 nm.

In some embodiments, the inner core comprises at least one of aluminum, copper, nickel, tin, zinc, chromium, iron, lithium, cobalt and oxides or alloys thereof, and the like.

In some embodiments, a ratio of a metal to a metal oxide in the inner core is 1:1.

In some embodiments, the diameter of the inner core ranges from 0 nm to 100 nm.

According to the embodiments of the present application, provided is an apparatus for preparing a composite current collector. The apparatus comprises a transmission component, spraying devices and a coating component. The transmission component is used for transmitting a base film. The spraying devices are used for spraying composite particles to form an interlayer on the base film. The coating component is used for forming a metal layer on the interlayer.

In some embodiments, the spraying device comprises: a cavity, an intake pipeline, a feed inlet and a nozzle. The intake pipeline extends from one end of the cavity to the inside of the cavity. The feed inlet extends from one side of the cavity to the inside of the cavity; the nozzle connects the intake pipeline and the feed inlet in the cavity, and extends toward the other end of the cavity. The intake pipeline is configured to introduce a carrier gas into the nozzle, and the feed inlet is configured to introduce the composite particles into the nozzle. The composite particles are sprayed to the base film from the nozzle through the carrier gas.

In some embodiments, the spraying device also comprises: an auxiliary intake pipe. The auxiliary intake pipe is connected to an outlet adjacent to the nozzle. The auxiliary intake pipe is configured to introduce the carrier gas to change an angle of the composite particles leaving the outlet.

In some embodiments, an included angle between the outlet of the nozzle and the to-be-coated surface of the base film ranges from 0 degree to 90 degrees.

In some embodiments, the included angle between the outlet of the nozzle and the to-be-coated surface of the base film is 45 degrees.

In some embodiments, a distance between the outlet of the nozzle and the base film is between 100 mm and 300 mm, the spraying flow is 3000 sccm, and the spraying power ranges from 0 KW to 200 KW.

The present application provides a method for preparing a lithium battery composite current collector. The method comprises: forming an interlayer on a base film, the interlayer comprising composite particles comprising a conductive inner core and a thermoplastic cladding layer, wherein the inner core is distributed on the base film in a full-wrapping or semi-wrapping manner by the cladding layer; and forming a metal layer on the composite particle layer.

In the composite current collector provided by the present application, the composite particles are used as the interlayer, which can improve the binding force between the metal layer deposited by evaporation and the base film while not affecting the overall conductivity, thereby ensuring the stability of the battery in the running in the future.

### Brief description of the drawings

The drawings are used for providing further understanding of the present application and constitute one part of the specification, and used for explaining the present application together with specific embodiments below, but do not limit the present application. In the figures:
FIG. 1A is a structural diagram of a composite particle according to an embodiment of the present application.
FIG. 1B is a structural diagram of a composite current collector according to an embodiment of the present application.
FIG. 2 is a diagram of an apparatus for preparing a composite current collector of a lithium battery according to an embodiment of the present application.
FIG. 3A is a sectional view of a spraying device according to an embodiment of the present application.
FIG. 3B is a sectional view of a spraying device according to another embodiment of the present application.
FIG. 4 shows flow steps of a method for preparing a lithium battery composite current collector according to an embodiment of the present application.

### Detailed Description

The following disclosed contents provide multiple embodiments or examples, which can be used for implementing different features of the disclosed contents. Specific examples of components and configurations described hereinafter are intended to simplify the disclosed contents. Of course, these descriptions are exemplary, but are not intended to limit the disclosed contents. For example, in the description hereinafter, forming a first feature on or above a second feature may include some embodiments in which the first and second features are in direct contact with each other; and also may include some embodiments in which additional components are formed between the above first and second features, so that the first and second feature may not be in direct contact with each other. In addition, component symbols and/or reference numbers may be repeatedly used in multiple embodiments in the disclosed contents. Such the repeated use is based on the purpose of simplicity and clarity, and does not represent the relationship between the different embodiments and/or configurations.

Also, the use of spatially relative terms such as "below", "under", "lower than", "on", "above" and their similarities here may be for the convenience of illustrating the relationship between one component or feature shown in the diagram relative to another or more components or features. These spatially relative terms not only refer to orientations shown in the figures, but also encompass various different orientations at which apparatuses are located when in use or operation. The apparatus may be placed in other orientations (such as rotated 90 degrees or in other orientations), and these spatially relative descriptive vocabulary should be explained accordingly.

Although the numerical ranges and parameters used to define the broader scope of this application are approximate, the relevant numerical values in the specific embodiments have been presented as accurately as possible here. However, any numerical value inevitably contains standard deviation due to individual testing methods. Here, "about" usually refers to plus or minus 10%, 5%, 1% or 0.5% of an actual value in a specific value or range. Alternatively, the term "about" represents actual values falling within the acceptable standard error of the mean, depending on the considerations of those with ordinary knowledge in the technical field to which the present application belongs. It should be understood that except for experimental examples or unless otherwise explicitly stated, all ranges, quantities, values, and percentages used here (for example, amount, time duration, temperature, operating conditions and quantity ratios for describing materials, and other similar factors) have been modified with "about". Therefore, unless otherwise stated, the numerical parameters disclosed in this specification and the accompanying claims are approximate and may be changed as needed. At least these numerical parameters should be understood as the significant digits indicated and the values obtained by applying the general carry method. Here, a numerical range is expressed as being from one endpoint to another endpoint or between two endpoints; unless otherwise specified, the numerical range mentioned here include endpoints.

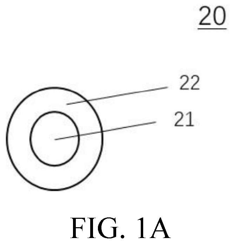

Referring to FIG. 1A, FIG. 1A is a structure diagram of a composite particle 20 according to an embodiment of the present application. In some embodiments, the composite particle 20 can be used for preparing a lithium battery composite current collector. The composite current collector prepared by the composite particles 20 can promote the binding force between the base film and the subsequent metal layer, and improve the stability of the battery during the running. In some embodiments, the composite particle 20 comprises a conductive inner core 21 and thermoplastic cladding layer 22.

The inner core 21 comprises at least one of aluminum, copper, nickel, tin, zinc, chromium, iron, lithium, cobalt and oxides or alloys thereof, and the like. In some embodiments, the inner core 21 comprises a metal and a metal oxide in a ratio of 1:1. The diameter of the inner core 21 ranges from 0 nm to 100 nm.

The cladding layer 22 comprises a mixture of one or more of polyethylene, polypropylene, polyvinyl chloride, polystyrene, polyamide, polyoxymethylene, polycarbonate, polyphenylene ether, polysulfone and polyethylene terephthalate. In some embodiments, the cladding layer 22 is also doped with graphene. In some embodiments, the thickness of the cladding layer 22 is in a range of less than 10 nm, preferably, the thickness of the cladding layer 22 ranges from 6 nm to 8 nm.

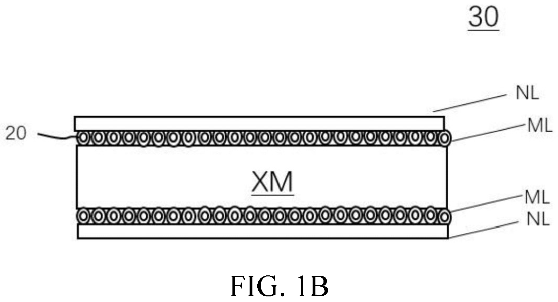

Referring to FIG. 1B, FIG. 1B is a structural diagram of a composite current collector 30 according to an embodiment of the present application. In some embodiments, the composite current collector 30 can be used in a lithium battery. In some embodiments, the composite current collector 30 comprises a base film XM, an interlayer composed of composite particles 20 shown in FIG. 1A and a metal layer NL formed by evaporation on the base film XM and the interlayer ML.

When the composite particles 20 are sprayed on the surface of the base film XM, the thermoplastic polymer material of the cladding layer 22 of the composite particle 20 is softened or molten by heating to be in a plasticity state and well fused with the base film XM, and the inner core 21 is distributed on the base film XM in a full-wrapping or semi-wrapping manner. Since the thickness of the cladding layer 22 is less than 10 nm, the conductive particles in the inner core 21 form a conductive seed layer on the base film XM according to an electronic tunneling effect. When the metal layer NL subjected to post evaporation is thickened, the binding force between the metal layer NL deposited by evaporation and the base film XM is improved while not affecting the overall conductivity, thereby ensuring the stability of the battery in the running in the future.

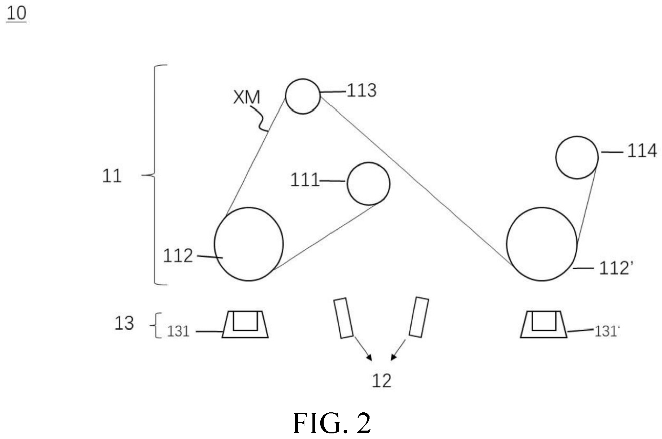

FIG. 2 is a diagram of an apparatus 10 for preparing a lithium battery composite current collector according to an embodiment of the present application. In some embodiments, the apparatus 10 is used for preparing a composite current collector 30 as shown in FIG. 1B. The apparatus 10 can conduct coating on the two surfaces of the base film XM separately or simultaneously. In some embodiments, the apparatus 10 comprises a transmission component 11, spraying devices 12 and 12', and a coating component 13.

The transmission component 11 is used for transmitting the base film XM. In some embodiments, the transmission component 11 comprises an unwinding roller 111, transport rollers 112 and 112', a transitional roller 113 and a winding roller 114. After the base film XM is unwound by the unwinding roller 111, it is guided by the transport roller 112, the transitional roller 113 and the transport roller 112' in sequence, and finally wound by the winding roller 114. In some embodiments, the base film XM is a thermoplastic polymer base film. In some embodiments, the base film XM comprises a mixture of any one or more of polypropylene, polyethylene terephthalate, polybutylene terephthalate, polyethylene naphthalate, polyethylene, polypropylene, polyvinyl chloride, polyvinylidene fluoride, polytetrafluoroethylene, polyphenylene sulfide, polyphenylene ether, polyacrylonitrile, cellulose acetate, polystyrene or polyimide, etc. In some embodiments, the thickness of the base film XM is 0-20 µm.

The spraying devices 12 and 12' and the coating component 13 are arranged at the same side of the apparatus 10. The spraying devices 12 and 12' are configured to respectively spray the composite particles 20 on different surfaces of the base film XM to form an interlayer ML on different surfaces of the base film XM.

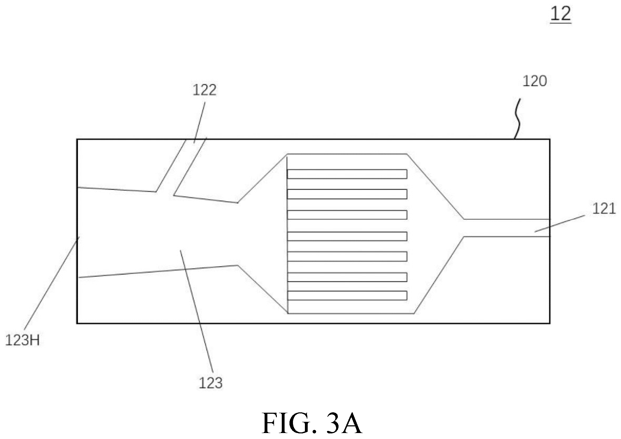

Referring to FIG. 3A, FIG. 3A is a sectional view of a spraying device 12 according to an embodiment of the present application. The structure of the spraying device 12 is basically the same as that of the spraying device 12', so they will not be further elaborated. In some embodiments, the spraying device 12 comprises a cavity 120, an intake pipeline 121, a feed inlet 122 and a nozzle 123. In some embodiments, the intake pipeline 121 extends from one side of the cavity 120 to the inside of the cavity 120, and the intake pipeline 121 is configured to introduce a carrier gas into the nozzle 123. In some embodiments, the feed inlet 122 extends from one side of the cavity 120 to the inside of the cavity 120, and the feed inlet 122 is configured to introduce the composite particles 20 into the nozzle 123. In some embodiments, the nozzle 123 connects the intake pipeline 121 and the feed inlet 122 in the cavity 120, wherein the composite particles 20 are sprayed from the nozzle 123 to the base film XM through the carrier gas.

In some embodiments, an included angle between the outlet 123H of the nozzle 123 and the to-be-coated surface of the base film XM ranges from 0 degree to 90 degrees, preferably, 45 degrees. In some embodiments, a distance between the outlet 123H of the nozzle 123 and the to-be-coated surface of the base film XM is between 100 mm and 300 mm. In some embodiments, the spraying device 12 sprays the composite particles in a spraying flow of 3000 sccm and in a spraying power ranging from 0 KW to 200 KW.

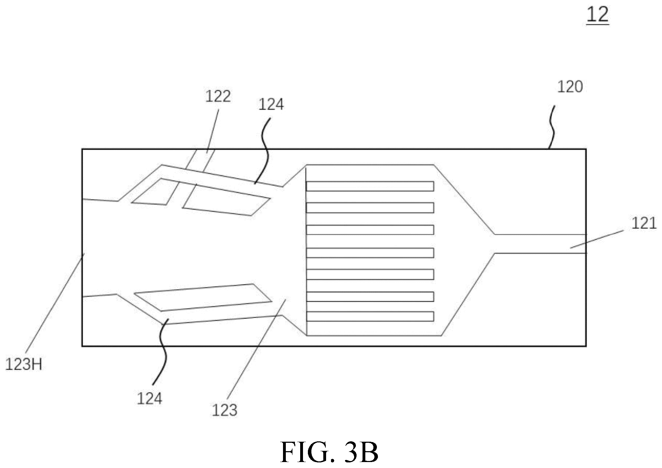

Referring to FIG. 3B, FIG. 3B is a sectional view of a spraying device 12 according to another embodiment of the present application. The spraying device 12 in the embodiment as shown in FIG. 3B is roughly similar to the spraying device 12 in the embodiment of FIG. 3A except that the spraying device 12 in the embodiment as shown in FIG. 3B also comprises an auxiliary intake pipe 124, thus the same parts will be omitted here to save space. In some embodiments, the auxiliary intake pipe 124 is connected between the intake pipeline 121 and the nozzle 123. In some embodiments, the auxiliary intake pipe 124 is connected to a position close to the outlet 123H, which is configured to introduce the carrier gas into the nozzle 123 to change an angle of the composite particles 20 leaving the outlet 123H, so that the composite particles 20 are more sufficiently mixed to obtain a more uniform interlayer ML after being sprayed on the base film XM.

Also referring to FIG. 2, the coating component 13 is configured to form the metal layer NL on the interlayer ML. In some embodiments, the coating component 13 evaporates a target to produce a vapor comprising a target component. In some embodiments, the coating component 13 comprises crucibles 131 and 131' which are used for bearing the target. In some embodiments, the coating component 13 also comprises a target conveying device and a heating device (not shown), the target conveying device is configured to convey the target into the crucibles 131 and 131'. The heating device for example but is not limited to an electron gun to evaporate the targets in the crucibles 131 and 131'. It is noted that the present application does not limit the specific implementation of the heating device, as long as the target can be evaporated to conduct evaporation and deposition on the base film XM, it should belong to the scope of the present application.

The positions of the spraying device 12 and the crucible 131 as well as the transport roller 112 correspond, and the surface of the base film XM borne by the transport roller 112 toward the spraying device 12 and the crucible 131 will be coated. In addition, the positions of the spraying device 12' and the crucible 131' as well as the transport roller 112' correspond, and the surface of the base film XM borne by the transport roller 112' toward the spraying device 12' and the crucible 131' will be coated.

Simultaneously referring FIG. 1A, FIG. 1B and FIG. 2, the preparation process of the composite current collector 30 is roughly as follows:
The base film XM is installed on the transport component 11; subsequently, the base film XM is pre-treated using plasmas, for example, the plasmas are produced by discharge of reactive gases (for example but not limited toAr, O₂ and N₂), which comprise electrons, ions, free radicals and high-energy substances such as ultraviolet rays, the plasmas act on the base film XM, active particles and high-energy rays contained therein are utilized to react and collide with organic pollutants on the surface of the base film XM to form small-molecule volatile substances, the small-molecule volatile substances are removed from the surface to achieve cleaning effect, so that the surface is activated; subsequently, the coating component 13 is preheated, and the cavity of the apparatus 10 is vacuumized to 0.1-10 Pa. Subsequently, the spraying devices 12 and 12' are turned on to spray the composite particles 20 to form the interlayer ML on the two surfaces of the base film XM. Finally, the target is evaporated by the coating component 13, a metal layer NL is formed on the interlayer ML through evaporation, so as to obtain the composite current collector 30.

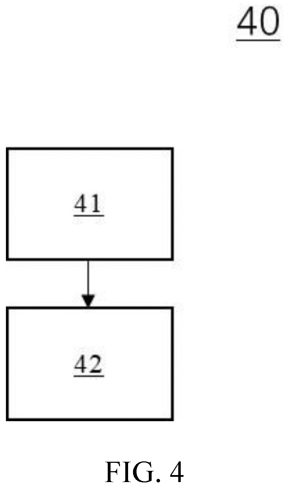

FIG. 4 shows flow steps of a method 40 for preparing a composite current collector of a lithium battery according to an embodiment of the present application. In some embodiments, the method 40 is implemented by the apparatus 10 to obtain the composite current collector 30 as shown in FIG. 1B.

If similar results can be obtained roughly, the present application is not limited to executing the steps of the method 40 completely. The method 40 roughly comprises step 41 and step 42. In step 41, the interlayer is formed on the base film, wherein the interlayer comprises composite particles comprising a conductive inner core and a thermoplastic cladding layer, and the inner core is distributed on the base film in a full-wrapping or semi-wrapping manner. In step 42, a metal layer is formed on a composite particle layer, so as to obtain the composite current collector.

For a composite current collector 30 formed by different composite particles 20, the applicant conducts a series of experiments to verify the peel strength, tensile strength and elongation at break of the composite current collector. The peel strength test refers to "Test Method for Peel Strength of Adhesive Tapes in GB/T 2792-2014". The peel strength refers to separation difficulty between materials, which depends on the bonding between the surfaces of two materials. When the peel strength is high, it represents that the interlayer is tightly bonded to the base film, and the finished product has good stability in subsequent processing and practical battery application, without the peeling and detachment of the metal layer. At the same time, the related tensile strength is also improved. The tensile strength test is conducted based on "GB/T 5230-2020 Electrolytic Copper Foil for Printed Boards" and by using a universal experimental tensile machine. Experimental results are listed in Table 1 below.

**Table 1**

| | Peel strength (N/cm) | Tensile strength (Mpa) | | Elongation at break (%) | |
|---|---|---|---|---|---|
| | | MD | TD | MD | TD |
| Example 1 | 8.2 | 210 | 182 | 35.2 | 32.4 |
| Example 2 | 9.1 | 221 | 197 | 40.8 | 37.2 |
| Example 3 | 6.8 | 197 | 189 | 33.2 | 31.2 |
| Example 4 | 8.5 | 217 | 191 | 39.2 | 35.7 |
| Example 5 | 9.3 | 233 | 215 | 48.2 | 44.6 |

The cladding layer 22 of the composite particle 20 in example 1 is polyethylene terephthalate (PET) with a thickness of 8 nm, and the inner core 21 is an aluminum particle with a diameter of 6 nm.

The thickness of the cladding layer 22 of the composite particle 20 in example 2 is PET with a thickness of 6 nm and doped with 0.1% graphene, and the inner core 21 is an aluminum particle with a diameter of 4 nm.

The thickness of the cladding layer 22 of the composite particle 20 in example 3 is PET with a thickness of 8 nm, and the inner core 21 is a copper particle with a diameter of 6 nm.

The thickness of the cladding layer 22 of the composite particle 20 in example 4 is PET with a thickness of 8 nm, and the inner core 21 is an aluminum oxide particle with a diameter of 4 nm.

The thickness of the cladding layer 22 of the composite particle 20 in example 5 is PET with a thickness of 8 nm, and the inner core 21 comprises an aluminum oxide particle with a diameter of 4 nm and an aluminum particle with a diameter of 4 nm in a ratio of 1:1.

It can be seen from the above experimental results that if the inner core 21 comprises the aluminum particle, the adhesion of the inner core to the base film is relatively good due to lighter relative atomic mass. The addition of graphene is conducive to improvement of overall adhesion and mechanical strength. Meanwhile, the smaller the nano particle size is, the more dense the formed membrane principle is, and the better the mechanical property is. In addition, the composite current collector 30 prepared by using the composite particles 20 has further improved breaking strength and elongation at break which are increased by 4 and 5 folds compared with the composite current collector prepared without using the composite particles 20.

As used herein, terms "approximately", "basically", "essentially" and "about" are used for describing and considering small changes. When used in conjunction with an event or a situation, the term may refer to examples in which the event or situation occurred precisely, as well as examples in which the event or situation occurred very approximately. As used herein, relative to a given value or range, the term "about" generally means being in ± 10%, ± 5%, ± 1%, or ± 0.5% of the given value or range. The range can be expressed herein from one endpoint to another or between two endpoints. Unless otherwise specified, all the scopes disclosed herein include endpoints. The term "substantially coplanar" can refer to two surfaces located along the same plane within a few micrometers (µm), such as within 10 µm, 5 µm, 1 µm, or 0.5 µm. When referring to values or characteristics that are "basically" the same, the term may refer to values within ± 10%, ± 5%, ± 1%, or ± 0.5% of the average of the values.

As used herein, the terms "approximately", "basically", "essentially", and "about" are used to describe and explain small changes. When used in conjunction with an event or a situation, the term may refer to examples in which the event or situation occurred precisely, as well as examples in which the event or situation occurred very approximately. For example, when used in conjunction with numerical values, the term may refer to a range of variation less than or equal to ± 10% of the stated value, such as less than or equal to ± 5%, less than or equal to ± 4%, less than or equal to ± 3%, less than or equal to ± 2%, less than or equal to ± 1%, less than or equal to ± 0.5%, less than or equal to ± 0.1%, or less than or equal to ± 0.05%. For example, if the difference between two values is less than or equal to ± 10% of the average of the values (e.g. less than or equal to ± 5%, less than or equal to ± 4%, less than or equal to ± 3%, less than or equal to ± 2%, less than or equal to ± 1%, less than or equal to ± 0.5%, less than or equal to ± 0.1%, or less than or equal to ± 0.05%), then the two values can be considered to be "basically" or "about" the same. For example, "basically" parallel can refer to an angle variation range of less than or equal to ± 10° relative to 0°, such as less than or equal to ± 5°, less than or equal to ± 4°, less than or equal to ± 3°, less than or equal to ± 2°, less than or equal to ± 1°, less than or equal to ± 0.5°, less than or equal to ± 0.1°, or less than or equal to ± 0.05° For example, "basically" vertical can refer to an angle variation range of less than or equal to ± 10° relative to 90°, such as less than or equal to ± 5°, less than or equal to ± 4°, less than or equal to ± 3 °, less than or equal to ± 2°, less than or equal to ± 1°, less than or equal to ± 0.5 °, less than or equal to ± 0.1°, or less than or equal to ± 0.05°.

For example, if the displacement between two surfaces is equal to or less than 5 µm, equal to or less than 2 µm, equal to or less than 1 µm, or equal to or less than 0.5 µm, then the two surfaces can be considered coplanar or essentially coplanar. If the displacement between any two points on the surface relative to the plane is less than or equal to 5 µm, less than or equal to 2 µm, less than or equal to 1 µm, or less than or equal to 0.5 µm, then the surface can be considered planar or essentially planar.

As used herein, unless otherwise specified in the context, singular terms "a/an" and "said" may include plural indicators. In the description of some embodiments, providing a situation that a component "on" or "above" another component can encompass that a former component is directly on a later component (for example, physically contact with the later component), and a situation that one or more intermediate components are located between the former component and the later component.

As used herein, for the ease of description, relative space terms, such as "below", "under", "lower", "above", "upper", "lower", "left" and "right" can be used herein to describe a relationship between one component or feature and another component and feature as shown in the figures. Except orientations described in the figures, relative space terms are intended to encompass different orientations of apparatuses in use or operation. The apparatus can be oriented in other manners (rotated by 90 degrees or in other orientations), and relative space description terms used herein can be correspondingly explained too. It should be understood that when one component is referred to as "connected to" or "coupled to" another component, it can be directly connected or coupled to the another component, or an intermediate component can be present.

The features of several embodiments and details of the present disclosure have been briefly described as above. The embodiments described in the present disclosure can be easily used as a basis for designing or modifying other processes and used for implementing the same or similar purposes and/or obtaining structures having the same or similar advantages in embodiments herein. These equivalent configurations do not depart from the disclosed spirit and scope of the present disclosure and different changes, replacements and variations can be made without departing from the spirit and scope of the present disclosure.

## Claims

1. A composite current collector for a lithium battery, comprising:
a base film, an interlayer and a metal layer formed on the interlayer;
wherein, the interlayer comprises composite particles comprising a conductive inner core and a thermoplastic cladding layer, and the inner core is distributed on the base film by the cladding layer in a full-wrapping or semi-wrapping manner to increase the mechanical strength of the composite current collector so that the composite current collector is not prone to shrinkage distortion due to heating.

2. The composite current collector according to claim 1, wherein the elongation at break of the composite current collector ranges from 31.2% to 48.2%.

3. The composite current collector according to claim 1, wherein the peel strength of the composite current collector ranges from 6.8 N/cm to 9.3 N/cm.

4. The composite current collector according to claim 1, wherein the tensile strength of the composite current collector ranges from 182 MPa to 233 MPa.

5. The composite current collector according to claim 1, wherein the cladding layer comprises a mixture of any one or more of polyethylene, polypropylene, polyvinyl chloride, polystyrene, polyamide, polyoxymethylene, polycarbonate, polyphenylene ether, polysulfone and polyethylene terephthalate.

6. The composite current collector according to claim 5, wherein the cladding layer also comprises graphene.

7. The composite current collector according to claim 1, wherein the thickness of the cladding layer is in a range of less than 10 nm.

8. The composite current collector according to claim 7, wherein the thickness of the cladding layer ranges from 6 nm to 8 nm.

9. The composite current collector according to claim 1, wherein the inner core comprises at least one of aluminum, copper, nickel, tin, zinc, chromium, iron, lithium, cobalt and oxides or alloys thereof, and the like.

10. The composite current collector according to claim 1, wherein a ratio of a metal to a metal oxide in the inner core is 1:1.

11. The composite current collector according to claim 1, wherein the diameter of the inner core ranges from 0 nm to 100 nm.

12. An apparatus for preparing a composite current collector, comprising:
a transmission component used for transmitting a base film;
a spraying device used for spraying composite particles to form an interlayer on the base film; and
a coating component used for forming a metal layer on the interlayer.

13. The apparatus according to claim 12, wherein the spraying device comprises:
a cavity;
an intake pipeline extending from one end of the cavity to the inside of the cavity;
a feed inlet extending from one side of the cavity to the inside of the cavity;
a nozzle connecting the intake pipeline and the feed inlet in the cavity, and extending toward the other end of the cavity; and
wherein, the intake pipeline is configured to introduce a carrier gas into the nozzle, the feed inlet is configured to introduce the composite particles into the nozzle, the composite particles are sprayed to the base film from the nozzle through the carrier gas.

14. The apparatus according to claim 13, wherein the spraying device also comprises:
an auxiliary intake pipe connected to an outlet adjacent to the nozzle, configured to introduce the carrier gas to change an angle of the composite particles leaving the outlet.

15. The apparatus according to claim 12, wherein an included angle between the outlet of the nozzle and the to-be-coated surface of the base film ranges from 0 degree to 90 degrees.

16. The apparatus according to claim 15, wherein the included angle between the outlet of the nozzle and the to-be-coated surface of the base film is 45 degrees.

17. The apparatus according to claim 12, wherein a distance between the outlet of the nozzle and the base film is between 100 mm and 300 mm, the spraying flow is 3000 sccm, and the spraying power ranges from 0 KW to 200 KW.

18. A method for preparing a lithium battery composite current collector, comprising:
forming an interlayer on a base film, the interlayer comprising composite particles comprising a conductive inner core and a thermoplastic cladding layer, wherein the inner core is distributed on the base film in a full-wrapping or semi-wrapping manner by the cladding layer; and
forming a metal layer on the composite particle layer.
